# EUROPEAN PATENT SPECIFICATION

(11) **EP 1 571 026 B1**
(45) Date of publication and mention of the grant of the patent: **15.11.2006**
(21) Application number: 04100798.0
(22) Date of filing: 01.03.2004
(51) Int. Cl.: B60J 7/047

(54) **Open roof construction for a vehicle and method for opening it**
Öffnungsfähige Dachkonstruktion für ein Fahrzeug und Öffnungsverfahren
Construction de toit ouvrant pour véhicule et procédé d'ouverture

(43) Date of publication of application: 07.09.2005
(73) Proprietor: Inalfa Roof Systems Group B.V., 5804 AH Venray (NL)
(72) Inventor: Van De Logt, Frank Henricus Gerardus, 5432 DC, Cuijk (NL)
(74) Representative: Voncken, Bartholomeus Maria Ch.

(56) References cited:
- DE-A- 3 223 136
- DE-A- 10 063 055
- US-A- 4 852 938
- US-A- 6 056 352
- US-A1- 2001 028 181
- US-B1- 6 457 770

## Description

The invention firstly relates to an open roof construction for a vehicle, comprising a roof opening provided in a stationary roof part, a closure means which is movable between a position for closing said roof opening and a position for opening said roof opening, and a sunshade means which is movable between a position overlapping said roof opening and a position freeing said roof opening, wherein the closure means comprises a number of separate closure panels positioned, in the closing position of the closure means, one behind the other in the longitudinal direction of the vehicle, whereas the sunshade means comprises a number of sunshade panels positioned, in the overlapping position of the sunshade means, one behind the other in the longitudinal direction of the vehicle, and wherein the closure panels as well as the sunshade panels assume a stacked position one on top of the other behind the roof opening when positioned in the opening and freeing position, respectively.

Such an open roof construction is known from DE-A-19851366. In this known open roof construction the closure means comprises a forward and rearward closure panel, whereas the sunshade means comprises a forward and rearward sunshade panel. In the opening position of the closure means and freeing position of the sunshade means these four panels are moved below the stationary roof part in such a manner, that all four panels are positioned one on top of the other. When such a configuration is used in an open roof construction, in which the closure means and sunshade means comprise a larger number of separate panels, the overall height of the stack of panels in the opening and freeing position of the closure means and sunshade means, respectively, would increase considerably, which may cause problems because of a reduced height of the passenger compartment of the vehicle.

Another known open roof construction is shown in US 6 457 770.

It is an object of the present invention to provide an open roof construction of the type referred to above, in which said disadvantage is prevented in a simple, yet nevertheless effective manner.

Thus, in accordance with the present invention the open roof construction as defined in the preamble of claim 1 is characterized in that the closure panels and sunshade panels, respectively, define separate stacks one behind the other in the longitudinal direction of the vehicle.

Because the closure panels at one hand and the sunshade panels at the other hand define separate stacks positioned one behind the other, the overall height of such stacks may be limited, such that no problems arise with respect to the inner height of the passenger compartment of the vehicle.

It is noted, that is not strictly necessary, that only one stack of closure panels and only one stack of sunshade panels are formed. It might be possible, that the closure panels are arranged in more than one stack, as applies too with respect to the sunshade panels. However, in its most preferred embodiment, the closure panels will define only one stack, and the sunshade panels will define only one other stack.

In accordance with a preferred embodiment of the open roof construction according to the present invention, the stack of stacked sunshade panels is positioned behind the stack of stacked closure panels. Such a positioning of a stack of closure panels will simplify and operating mechanism needed for moving the respective panels towards their respective positions. In most cases, stacking the closure panels only will be possible after removing the sunshade panels, i.e. after moving the sunshade panels towards their freeing position (in which they define the stack of sunshade panels). When, in such a case, the stack of closure panels would be positioned behind the stack of sunshade panels, the closure panels would have to bypass the stack of sunshade panels in some manner, which then would complicate the operating mechanism considerably.

The complexity of any operating mechanism may be limited, when in accordance with yet another embodiment of the open roof construction according to the present invention, in the stack of sunshade panels the rearmost sunshade panel is positioned at the top and the foremost sunshade panel is positioned at the bottom, with intermediate sunshade panels assuming corresponding positions in the stack.

The same applies, when, in accordance with still another embodiment of the open roof construction in accordance with the present invention, in the stack of closure panels the rearmost closure panel is positioned at the bottom and the foremost closure panel is positioned at the top, with intermediate closure panels assuming corresponding positions in the stack.

The invention secondly refers to a method for opening an open roof construction for a vehicle of the type comprising a roof opening provided in a stationary roof part, a closure means which is movable between a position for closing said roof opening and a position for opening said roof opening, and a sunshade means which is movable between a position overlapping said roof opening and a position freeing said roof opening, wherein the closure means comprises a number of separate closure panels positioned, in the closing position of the closure means, one behind the other in the longitudinal direction of the vehicle, whereas the sunshade means comprises a number of sunshade panels positioned, in the overlapping position of the sunshade means, one behind the other in the longitudinal direction of the vehicle, wherein the closure panels as well as the sunshade panels are moved towards a stacked position one on top of the other behind the roof opening when being moved towards the opening and freeing position, respectively.

In accordance with the present invention, said method is characterized in that the closure panels and sunshade panels, respectively, are stacked in separate stacks one behind the other in the longitudinal direction of the vehicle.

Preferred embodiments of the method according to the present invention are defined in subclaims 6-8.

Hereinafter the invention will be elucidated referring to the drawings, in which an embodiment of an open roof construction according to the present invention is illustrated.

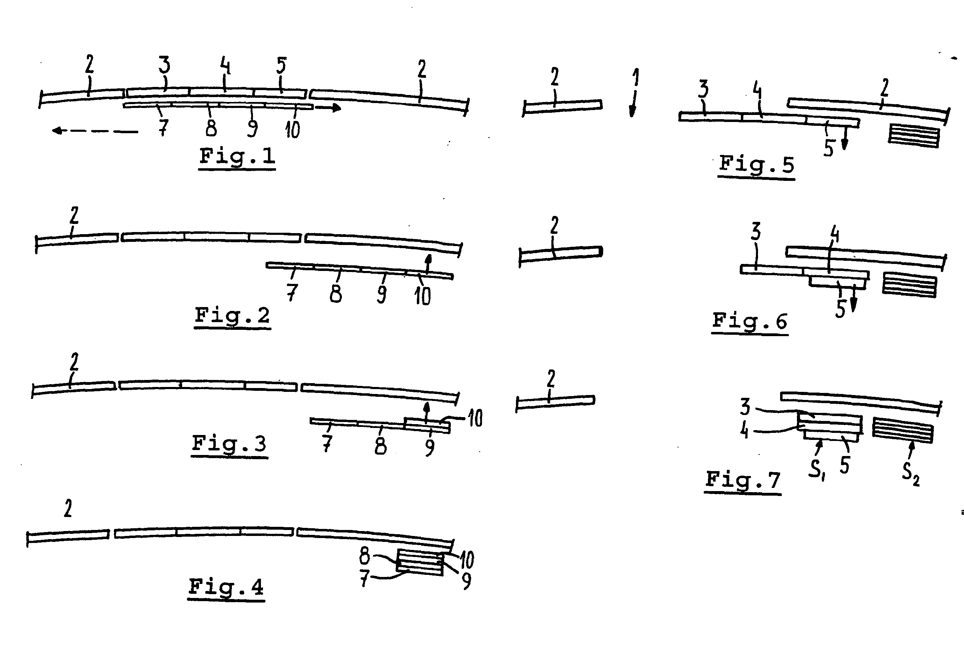

Figures 1-7 show schematically an open roof construction in accordance with the present invention at successive stages during opening it.

The open roof construction for a vehicle in accordance with the present invention comprises a roof opening 1 (best seen in fig. 5) provided in a stationary roof part 2. In figure 1 said roof opening 1 is closed by means of a closure means comprising three separate closure panels 3,4,5 positioned one behind the other in the longitudinal direction 6 of the vehicle. The use of the phrase 'separate' does not necessarily mean that the panels are not interconnected.

The closure means 3, 4, 5 is movable between the closing position illustrated in figure 1 (in which said roof opening 1 is fully closed) and an opening position (illustrated in figure 7) in which the roof opening is fully opened.

Positioned below the closure means is a sunshade means comprising four separate sunshade panels 7-10 positioned one behind the other in the longitudinal direction 6 of the vehicle. Also here, the use of the phrase 'separate' does not necessarily mean that the panels are not interconnected. The sunshade means 7-10 is movable between the position illustrated in fig. 1 in which it overlaps the roof opening 1 and the position illustrated in fig.7, in which it frees the roof opening 1.

As clearly illustrated in fig.7, the closure panels 3-5 and sunshade panels 7-10 define separate stacks S₁ and S₂ one behind the other in the longitudinal direction 6 of the vehicle. Specifically, stack S₁ comprising the closure panels 3-5 is positioned ahead stack S₂ comprising the sunshade panels 7-10.

When opening the open roof construction illustrated in fig. 1, firstly the sunshade means (sunshade panels 7-10) are moved rearwardly (fig.1). When the rearmost sunshade panel 10 has reached the location of the future stack S₂, it is moved upwardly, whereas the remaining sunshade panels 7-9 are moved further until the next sunshade panel 9 is positioned below sunshade panel 10 (fig.3).

This process is repeated until all four sunshade panels 7-10 are positioned in stack S₂ (fig.4), in which stack S₂ the rearmost sunshade panel 10 is positioned at the top and the foremost sunshade panel 7 is positioned at the bottom of the stack.

Next the closure means (closure panels 3-5) are lowered and moved rearwardly, until the rearmost closure panel 5 has reached the position of the future stack S₁ (fig.5). Then, the rearmost closure panel 5 is lowered and the remaining closure panels 4 and 3 are moved further until closure panel 4 is positioned above closure panel 5 (fig. 6). Finally the assembly of closure panels 4 and 5 is lowered further and the remaining closure panel 3 is positioned on top of this assembly. This completes stack S₁ comprising closure panels 3-5 (fig.7).

For again closing the open roof construction the described succession of steps will be reversed.

The invention is not limited to the embodiment described before which may be varied widely within the scope of the invention as defined by the appending claims. For example, when the closure means and/or sunshade means comprises a large number of separate panels, more than one stack of each type of panels may be formed when moving the open roof construction towards its open position.

## Claims

1. Open roof construction for a vehicle, comprising a roof opening (1) provided in a stationary roof part (2), a closure means which is movable between a position for closing said roof opening and a position for opening said roof opening (1), and a sunshade means which is movable between a position overlapping said roof opening (1) and a position freeing said roof opening (1), wherein the closure means comprises a number of separate closure panels (3, 4, 5) positioned, in the closing position of the closure means, one behind the other in the longitudinal direction of the vehicle, whereas the sunshade means comprises a number of sunshade panels (7-10) positioned, in the overlapping position of the sunshade means, one behind the other in the longitudinal direction of the vehicle, and wherein the closure panels (3-5) as well as the sunshade panels (7-10) assume a stacked position one on top of the other behind the roof opening when positioned in the opening and freeing position, respectively, **characterized in that** the closure panels (3-5) and sunshade panels (7-10), respectively, define separate stacks one behind the other in the longitudinal direction of the vehicle.

2. Open roof construction according to claim 1, wherein the stack of stacked sunshade panels is positioned behind the stack of stacked closure panels.

3. Open roof construction according to claim 2, wherein in the stack of sunshade panels the rearmost sunshade panel (10) is positioned at the top and the foremost sunshade panel (7) is positioned at the bottom, with intermediate sunshade panels (8, 9) assuming corresponding positions in the stack.

4. Open roof construction according to claim 2 or 3, wherein in the stack of closure panels the rearmost closure panel (5) is positioned at the bottom and the foremost closure panel (3) is positioned at the top, with intermediate closure panels (4) assuming corresponding positions in the stack.

5. Method for opening an open roof construction for a vehicle of the type comprising a roof opening (1) provided in a stationary roof part, a closure means which is movable between a position for closing said roof opening and a position for opening said roof opening (1), and a sunshade means which is movable between a position overlapping said roof opening and a position freeing said roof opening, wherein the closure means comprises a number of separate closure panels (3-5) positioned, in the closing position of the closure means, one behind the other in the longitudinal direction of the vehicle, whereas the sunshade means comprises a number of sunshade panels (7-10) positioned, in the overlapping position of the sunshade means, one behind the other in the longitudinal direction of the vehicle, wherein the closure panels (3-5) as well as the sunshade panels (7-10) are moved towards a stacked position one on top of the other behind the roof opening when being moved towards the opening and freeing position, respectively, **characterized in that** the closure panels (3-5) and sunshade panels (7-10), respectively, are stacked in separate stacks one behind the other in the longitudinal direction of the vehicle.

6. Method according to claim 5, wherein firstly the stack of stacked sunshade panels is formed and next, ahead of said stack of sunshade panels, the stack of closure panels is formed.

7. Method according to claim 6, wherein the sunshade panels are successively stacked from top to bottom in such a way that the rearmost sunshade panel will be positioned at the top and the foremost sunshade panel will be positioned at the bottom.

8. Method according to claim 6 or 7, wherein the closure panels are successively stacked from bottom to top in such a way that the rearmost closure panel will be positioned at the bottom and the foremost closure panel will be positioned at the top.

## Patentansprüche

1. Offendach-Konstruktion für ein Fahrzeug, aufweisend eine Dachöffnung (1), welche in einem stationären Dachteil (2) vorgesehen ist, ein Verschlussmittel, welches zwischen einer Position zum Schließen der Dachöffnung und einer Position zum Öffnen der Dachöffnung (1) bewegbar ist, und ein Sonnenschutzmittel, welches zwischen einer die Dachöffnung (1) bedeckenden Position und einer die Dachöffnung (1) freigebenden Position bewegbar ist, wobei das Verschlussmittel eine Anzahl von separaten Verschluss-Paneelen (3,4,5) aufweist, welche in der Schließ-Position des Verschlussmittels eines hinter dem anderen in Längsrichtung des Fahrzeugs angeordnet sind, wobei das Sonnenschutzmittel eine Anzahl von Sonnenschutz-Paneelen (7-10) aufweist, welche in der Bedeck-Position des Sonnenschutzmittel eins hinter dem anderen in der Längsrichtung des Fahrzeugs angeordnet sind, und wobei die Verschluss-Paneele (3-5) sowie die Sonnenschutz-Paneele (7-10) eine Stapel-Position eines auf dem anderen hinter der Dachöffnung einnehmen, wenn sie in der Offen- bzw. Freigabe-Position angeordnet sind, **dadurch gekennzeichnet, dass** die Verschluss-Paneele (3-5) und Sonnenschutz-Paneele (7-10) jeweils separate Stapel einer hinter dem anderen in Längsrichtung des Fahrzeugs ausbilden.

2. Offendach-Konstruktion gemäß Anspruch 1, wobei der Stapel von gestapelten Sonnenschutz-Paneelen hinter dem Stapel von gestapelten Verschluss-Paneelen angeordnet ist.

3. Offendach-Konstruktion gemäß Anspruch 2, wobei in dem Stapel von Sonnenschutz-Paneelen das hinterste Sonnenschutz-Paneel (10) zuoberst angeordnet ist und wobei das vorderste Sonnenschutz-Paneel (7) zuunterst angeordnet ist, wobei dazwischen angeordnete Sonnenschutz-Paneele (8,9) in dem Stapel korrespondierende Positionen einnehmen.

4. Offendach-Konstruktion gemäß Anspruch 2 oder 3, wobei in dem Stapel von Verschluss-Paneelen das hinterste Verschluss-Paneel (5) zuunterst angeordnet ist und das vorderste Verschluss-Paneel (3) zuoberst angeordnet ist, wobei dazwischen angeordnete Verschluss-Paneele (4) in dem Stapel korrespondierende Positionen einnehmen.

5. Verfahren zum Öffnen einer Offendach-Konstruktion für ein Fahrzeug von dem Typ, welcher aufweist eine Dachöffnung (1), welche in einem stationären Dachteil vorgesehen ist, ein Verschlussmittel, welches zwischen einer Position zum Schließen der Dachöffnung und einer Position zum Öffnen der Dachöffnung (1) bewegbar ist, und ein Sonnenschutzmittel, welches zwischen einer die Dachöffnung bedeckenden Position und einer die Dachöffnung freigebenden Position bewegbar ist, wobei das Verschlussmittel eine Anzahl von separaten Verschluss-Paneelen (3-5) aufweist, welche in der Schließ-Position des Verschlussmittels eines hinter dem anderen in Längsrichtung des Fahrzeugs angeordnet sind, wobei das Sonnenschutzmittel eine Anzahl von Sonnenschutz-Paneelen (7-10) aufweist, welche in der Bedeck-Position des Sonnenschutzmittels eins hinter dem anderen in Längsrichtung des Fahrzeugs angeordnet sind, wobei die Verschluss-Paneele (3-5) sowie die Sonnenschutz-Paneele (7-10) hin zu einer Stapel-Position eines auf dem anderen hinter die Dachöffnung bewegt werden, wenn sie hin zu der Offen- bzw. Freigabe-Position bewegt werden, **dadurch gekennzeichnet, dass** die Verschluss-Paneele (3-5) bzw. die Sonnenschutz-Paneele (7-10) in separaten Stapeln einer hinter dem anderen in Längsrichtung des Fahrzeugs gestapelt werden.

6. Verfahren gemäß Anspruch 5, wobei zuerst der Stapel von gestapelten Sonnenschutz-Paneelen ausgebildet wird und als Nächstes vor dem Stapel von Sonnenschutz-Paneelen der Stapel von Verschluss-Paneelen ausgebildet wird.

7. Verfahren gemäß Anspruch 6, wobei die Sonnenschutz-Paneele aufeinanderfolgend von oben nach unten derart gestapelt werden, dass das hinterste Sonnenschutz-Paneel zuoberst angeordnet ist und das vorderste Sonnenschutz-Paneel zuunterst angeordnet ist.

8. Verfahren gemäß Anspruch 6 oder 7, wobei die Verschluss-Paneele aufeinanderfolgend von unten nach oben derart gestapelt werden, dass das hinterste Verschluss-Paneel zuunterst angeordnet ist und das vorderste Verschluss-Paneel zuoberst angeordnet ist.

## Revendications

1. Structure de toit ouvrant pour véhicule, comprenant une ouverture de toit (1) disposée dans une partie de toit fixe (2), des moyens de fermeture qui sont mobiles entre une position pour fermer ladite ouverture de toit et une position pour ouvrir ladite ouverture de toit (1), et des moyens pare-soleil qui sont mobiles entre une position recouvrant ladite ouverture de toit (1) et une position libérant ladite ouverture de toit (1) ; dans laquelle les moyens de fermeture comprennent un certain nombre de panneaux de fermeture distincts (3, 4, 5) positionnés, dans la position de fermeture des moyens de fermeture, l'un derrière l'autre dans la direction longitudinale du véhicule, tandis que les moyens pare-soleil comprennent un certain nombre de panneaux pare-soleil (7-10) positionnés, dans la position de recouvrement des moyens de pare-soleil, l'un derrière l'autre dans la direction longitudinale du véhicule, et dans laquelle les panneaux de fermeture (3-5) ainsi que les panneaux pare-soleil (7-10) prennent une position empilée l'un au-dessus de l'autre derrière l'ouverture de toit lorsqu'ils sont positionnés dans la position d'ouverture et de libération, respectivement, **caractérisée en ce que** les panneaux de fermeture (3-5) et les panneaux pare-soleil (7-10), respectivement, définissent des empilages séparés l'un derrière l'autre dans la direction longitudinale du véhicule.

2. Structure de toit ouvrant selon la revendication 1, dans laquelle l'empilage de panneaux pare-soleil empilés est positionné derrière l'empilage de panneaux de fermeture empilés.

3. Structure de toit ouvrant selon la revendication 2, dans laquelle, dans l'empilage des panneaux pare-soleil, le panneau pare-soleil le plus en arrière (10) est positionné en haut et le panneau pare-soleil le plus en avant (7) est positionné en bas, avec les panneaux pare-soleil intermédiaires (8, 9) prenant des positions correspondantes dans l'empilage.

4. Structure de toit ouvrant selon la revendication 2 ou 3, dans laquelle, dans l'empilage des panneaux de fermeture, le panneau de fermeture le plus en arrière (5) est positionné en bas et le panneau de fermeture le plus en avant (3) est positionné en haut, avec les panneaux de fermeture intermédiaires (4) prenant des positions correspondantes dans l'empilage.

5. Procédé pour ouvrir une structure de toit ouvrant pour un véhicule du type comprenant une ouverture de toit (1) disposée dans une partie de toit fixe, des moyens de fermeture qui sont mobiles entre une position pour fermer ladite ouverture de toit et une position pour ouvrir ladite ouverture de toit (1) et des moyens pare-soleil qui sont mobiles entre une position recouvrant ladite ouverture de toit et une position libérant ladite ouverture de toit, dans lequel les moyens de fermeture comprennent un certain nombre de panneaux de fermeture distincts (3-5) positionnés dans la position de fermeture des moyens de fermeture, l'un derrière l'autre dans la direction longitudinale du véhicule, tandis que les moyens pare-soleil comprennent un certain nombre de panneaux pare-soleil (7-10) positionnés, dans la position de recouvrement des moyens pare-soleil, l'un derrière l'autre dans la direction longitudinale du véhicule, dans lequel les panneaux de fermeture (3-5) ainsi que les panneaux pare-soleil (7-10) sont déplacés vers une position empilée l'un au-dessus de l'autre derrière l'ouverture de toit, lors du déplacement vers la position d'ouverture et de libération, respectivement, **caractérisé en ce que** les panneaux de fermeture (3-5) et les panneaux pare-soleil (7-10), respectivement, sont empilés dans des empilages séparés l'un derrière l'autre dans la direction longitudinale du véhicule.

6. Procédé selon la revendication 5, dans lequel, tout d'abord, l'empilage de panneaux pare-soleil empilés est formé et, ensuite, devant ledit empilage de panneaux pare-soleil, l'empilage de panneaux de fermeture est formé.

7. Procédé selon la revendication 6, dans lequel les panneaux pare-soleil sont successivement empilés du haut vers le bas, de sorte que le panneau pare-soleil le plus en arrière sera positionné en haut et le panneau pare-soleil le plus avant sera positionné en bas.

8. Procédé selon la revendication 6 ou 7, dans lequel les panneaux de fermeture sont successivement empilés à partir du bas vers le haut, de telle sorte que le panneau de fermeture le plus arrière sera positionné en bas et le panneau de fermeture le plus avant sera positionné en haut.
